# FASCICULE DE BREVET EUROPEEN

(11) **EP 3 794 252 B1**
(45) Date de publication et mention de la délivrance du brevet: **04.05.2022**
(21) Numéro de dépôt: 19745682.5
(22) Date de dépôt: 12.06.2019
(51) Int. Cl.: F16H 57/04, F02C 3/107, F02C 7/36, F01D 25/20

(54) **ENSEMBLE POUR TURBOMACHINE D'AÉRONEF COMPORTANT UN SYSTÈME AMÉLIORÉ DE LUBRIFICATION D'UN RÉDUCTEUR D'ENTRAINEMENT DE SOUFFLANTE EN CAS D'AUTOROTATION DE LA SOUFFLANTE**
ANORDNUNG FÜR FLUGZEUGTRIEBWERK MIT EINEM VERBESSERTEN SYSTEM ZUR SCHMIERUNG EINES LÜFTERANTRIEBUNTERSETZUNGSGETRIEBES IM FALL DER AUTOROTATION DES LÜFTERS
ASSEMBLY FOR AIRCRAFT TURBINE ENGINE COMPRISING AN IMPROVED SYSTEM FOR LUBRICATING A FAN DRIVE REDUCING GEAR IN CASE OF AUTOROTATION OF THE FAN

(30) Priorité: 18.06.2018 FR 1855345
(43) Date de publication de la demande: 24.03.2021
(73) Titulaire: SAFRAN AIRCRAFT ENGINES, 75015 Paris (FR)
(72) Inventeur: LEPRETRE, Jean-Baptiste Etienne Bernard, 77550 MOISSY-CRAMAYEL (FR)
(74) Mandataire: Brevalex
(86) Numéro de dépôt international: PCT/FR2019/051417
(87) Numéro de publication internationale: WO 2019/243710

(56) Documents cités:
- EP-A1- 3 109 412
- EP-A2- 2 538 055
- WO-A1-2010/092263
- FR-A1- 2 987 402
- FR-A1- 2 987 417
- FR-A1- 3 028 887

## Description

### DOMAINE TECHNIQUE

La présente invention se rapporte au domaine des turbomachines d'aéronef, et plus précisément aux turbomachines comprenant une soufflante entraînée par un réducteur, tel que cela est par exemple connu du document FR 2 987 402 A1.

L'invention concerne en particulier la gestion de la lubrification du réducteur, en cas d'autorotation de la soufflante.

### ETAT DE LA TECHNIQUE ANTERIEURE

Sur les turbomachines d'aéronef comprenant une soufflante entraînée par un réducteur, ce dernier est généralement agencé dans une enceinte lubrifiée à travers laquelle circule du lubrifiant amené par une pompe. Cette pompe est entraînée mécaniquement par un arbre de la turbomachine, par exemple l'arbre haute pression.

En cas d'extinction de la turbomachine durant le vol, la soufflante n'est plus entraînée par le réducteur, mais elle continue de tourner sous l'effet de l'air qui la traverse. Dans ces conditions, la soufflante est dite en autorotation, ou encore en « windmilling » ou « en moulinet ». Ces conditions peuvent également être rencontrées au sol, lorsque la turbomachine est éteinte.

Même si les vitesses d'autorotation de la soufflante restent relativement peu élevées, en particulier quand l'aéronef est au sol, il subsiste néanmoins un besoin de lubrification du réducteur entraîné par cette soufflante. La lubrification de l'enceinte renfermant le réducteur ne peut cependant plus être assurée par la pompe, car l'arbre haute pression ne tourne pas suffisamment rapidement pour entraîner cette pompe.

Les solutions existantes pour assurer la lubrification du réducteur dans ces conditions mettent généralement en place un circuit d'huile secondaire avec un réservoir auxiliaire et une pompe auxiliaire associés. Un circuit d'huile secondaire présente généralement des inconvénients en termes de masse, encombrement, complexité, coût et fiabilité.

Il existe par conséquent un besoin d'optimisation des solutions existantes, afin d'assurer la gestion de la lubrification du réducteur en cas d'autorotation de la soufflante.

### EXPOSÉ DE L'INVENTION

Pour répondre au moins partiellement à ce besoin, l'invention a tout d'abord pour objet un ensemble comprenant un réducteur d'entraînement de soufflante de turbomachine d'aéronef, ainsi qu'un système de lubrification comportant :
- une enceinte renfermant le réducteur ;
- des moyens de projection de lubrifiant sur le réducteur ;
- un conduit d'arrivée de lubrifiant destiné à conduire le lubrifiant vers les moyens de projection ;
- un conduit de récupération de lubrifiant communiquant avec un fond de l'enceinte.

Selon l'invention, le système de lubrification comporte en outre une vanne commandée équipant le conduit de récupération de lubrifiant, ainsi qu'un conduit d'évacuation de trop plein de lubrifiant raccordé d'une part à une sortie de trop plein du fond d'enceinte située au-dessus du niveau horizontal d'un point bas d'une pignonnerie du réducteur, et d'autre part au conduit de récupération de lubrifiant, en aval de la vanne commandée.

L'invention permet ainsi d'assurer de manière simple, fiable et performante la lubrification du réducteur en cas d'autorotation de la soufflante. En effet, suite à la fermeture de la vanne de commande, le faible débit de lubrifiant qui subsiste a pour conséquence de remplir le fond de l'enceinte, jusqu'au barbotage d'au moins une partie de la pignonnerie du réducteur.

En particulier, l'invention se révèle avantageuse en ce qu'elle ne requiert pas l'intégration d'une pompe ou d'un réservoir supplémentaire pour assurer la lubrification du réducteur en conditions d'autorotation.

L'invention présente par ailleurs au moins l'une des caractéristiques optionnelles suivantes, prises isolément ou en combinaison.

La vanne est commandée par la pression de lubrifiant circulant dans le conduit d'arrivée de lubrifiant, de sorte que plus la pression de lubrifiant est faible, plus la vanne a tendance à se fermer. La commande de la vanne est ainsi prévue pour que la vanne se ferme complètement lorsque la pression de lubrifiant devient inférieure à un seuil prédéterminé. Cette manière préférée de commander la vanne offre une fiabilité encore renforcée. Néanmoins, tout autre type de commande peut être envisagé pour le contrôle de la vanne, comme une simple commande électrique capable de générer la fermeture de la vanne lorsque la soufflante se trouve en conditions d'autorotation.

Par exemple, la vanne commandée est une vanne à tiroir, même si d'autres types de vannes sont envisageables, sans sortir du cadre de l'invention. De préférence, la vanne à tiroir est reliée à un organe mobile soumis à la pression du lubrifiant circulant dans le conduit d'arrivée de lubrifiant, cet organe mobile agissant contre l'action d'un ressort taré en fonction d'un seuil de pression de lubrifiant en dessous duquel la vanne est prévue pour se fermer complètement.

Le réducteur d'entraînement comporte un train épicycloïdal comprenant un planétaire intérieur, une couronne extérieure, ainsi qu'une rangée annulaire de satellites agencés entre le planétaire intérieur et la couronne extérieure.

Dans ce cas de figure, la sortie de trop plein du fond d'enceinte se situe de préférence en dessous du niveau horizontal du planétaire intérieur, et encore plus préférentiellement au niveau d'un plan fictif horizontal traversant la rangée annulaire de satellites. Cela permet d'éviter que l'enceinte ne se remplisse entièrement, tout en s'assurant que l'ensemble de la pignonnerie soit lubrifié, grâce en particulier à la rotation de la couronne extérieure qui est généralement l'organe de sortie du train couplé mécaniquement à la soufflante.

L'invention a également pour objet une turbomachine d'aéronef comprenant un tel ensemble, la turbomachine comportant une soufflante entraînée par le réducteur de cet ensemble.

Cette turbomachine est préférentiellement un turboréacteur à double flux et à double corps.

De préférence, le système de lubrification comporte une pompe d'alimentation configurée pour alimenter en lubrifiant le conduit d'arrivée de lubrifiant, et la turbomachine comporte un arbre moteur, de préférence un arbre haute pression, entraînant mécaniquement la pompe d'alimentation.

Enfin, l'invention a pour objet un procédé de commande de l'ensemble décrit ci-dessus, ce procédé étant tel qu'en cas d'autorotation de la soufflante, il comprend une étape de fermeture de la vanne commandée équipant le conduit de récupération de lubrifiant, afin que le fond de l'enceinte se remplisse de lubrifiant jusqu'à la sortie de trop plein.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique de côté d'un turboréacteur selon l'invention ;
- la figure 2 représente une vue schématique de côté d'un ensemble selon un mode de réalisation préféré de l'invention, cet ensemble équipant le turboréacteur de la figure précédente et étant montré dans un état tel qu'adopté durant des conditions normales de fonctionnement du turboréacteur; et
- la figure 3 représente une vue similaire à la précédente, avec l'ensemble montré dans un état tel qu'adopté en cas d'autorotation de la soufflante du turboréacteur.

### EXPOSÉ DÉTAILLÉ DE MODES DE RÉALISATION PRÉFÉRÉS

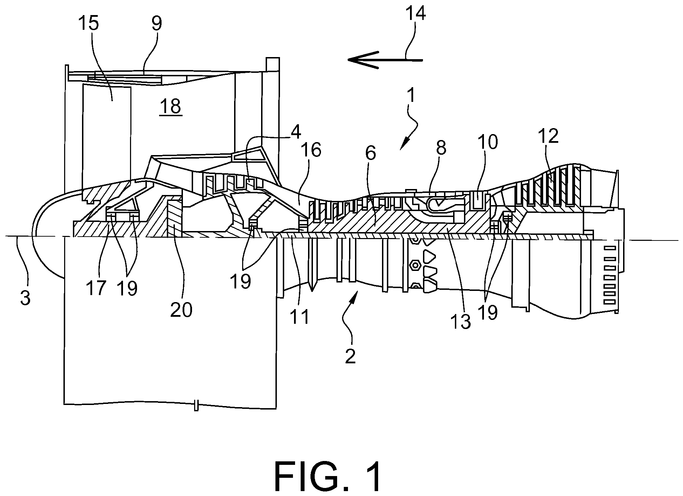

En référence à la figure 1, il est représenté un turboréacteur 1 à double flux et à double corps. Le turboréacteur 1 comporte de façon classique un générateur de gaz 2 de part et d'autre duquel sont agencés un compresseur basse pression 4, et une turbine basse pression 12. Le générateur de gaz 2 comprend un compresseur haute pression 6, une chambre de combustion 8 et une turbine haute pression 10. Par la suite, les termes « avant » et « arrière » sont considérés selon une direction 14 opposée à la direction d'écoulement principale des gaz au sein du turboréacteur, cette direction 14 étant parallèle à l'axe longitudinal 3 du turboréacteur.

Le compresseur basse pression 4 et la turbine basse pression 12 forment un corps basse pression, et sont reliés l'un à l'autre par un arbre basse pression 11 centré sur l'axe 3. De même, le compresseur haute pression 6 et la turbine haute pression 10 forment un corps haute pression, et sont reliés l'un à l'autre par un arbre haute pression 13 centré sur l'axe 3 et agencé autour de l'arbre basse pression 11. Les arbres sont supportés par des paliers de roulement 19, qui sont lubrifiés en étant agencés dans des enceintes d'huile. Il en est de même pour le moyeu de soufflante 17, également supporté par des paliers de roulement 19.

Le turboréacteur 1 comporte par ailleurs, à l'avant du générateur de gaz 2 et du compresseur basse pression 4, une soufflante 15 qui est ici agencée directement à l'arrière d'un cône d'entrée d'air du moteur. La soufflante 15 est rotative selon l'axe 3, et entourée d'un carter de soufflante 9. Cette soufflante n'est pas entraînée directement par l'arbre basse pression 11, mais entraînée indirectement par cet arbre via un réducteur 20, ce qui lui permet de tourner avec une vitesse plus lente. Comme cela sera détaillé ci-après, le réducteur 20 est également logé dans une enceinte d'huile pour permettre sa lubrification.

En outre, le turboréacteur 1 définit une veine primaire 16 destinée à être traversée par un flux primaire, ainsi qu'une veine secondaire 18 destinée à être traversée par un flux secondaire situé radialement vers l'extérieur par rapport au flux primaire.

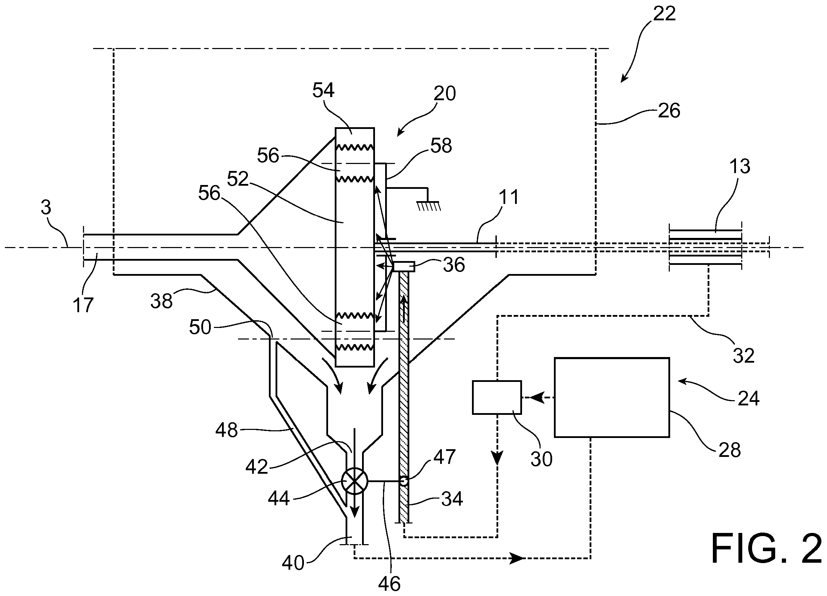

En référence à présent à la figure 2, il est représenté un ensemble 22 spécifique à l'invention, comprenant globalement le réducteur 20 ainsi qu'un système 24 permettant sa lubrification.

Plus précisément, le système de lubrification 24 comporte tout d'abord une enceinte d'huile 26 qui renferme le réducteur 20. Il comporte également un réservoir de lubrifiant 28, ainsi qu'une pompe d'alimentation 30 volumique (pompe à engrenages) qui dans le mode de réalisation représenté est entraînée mécaniquement par la rotation de l'arbre haute pression 13, via un système de transmission schématisé par la ligne pointillée 32. En alternative, la pompe d'alimentation 30 volumique peut être découplée de l'arbre 13 et entraînée en rotation par un moteur électrique de façon à ce que son débit de lubrifiant puisse être ajusté en pilotant la vitesse de rotation de la pompe par le pilotage du régime du moteur électrique. Le réservoir 28 et la pompe 30 communiquent avec un conduit d'arrivée de lubrifiant 34, qui est donc alimenté en lubrifiant provenant du réservoir 28, grâce à la pompe 30.

Le conduit d'arrivée de lubrifiant 34 présente ainsi une extrémité reliée à la pompe 30, ainsi qu'une extrémité opposée logée dans l'enceinte 26, et communiquant avec des moyens de projection de lubrifiant 36. Ces moyens peuvent prendre la forme d'un ou plusieurs gicleurs, ou de moyens analogues. Ils sont configurés pour projeter du lubrifiant sur tout ou partie de la pignonnerie du réducteur 20.

L'enceinte 26 présente un fond 38, dans lequel est logée une partie inférieure du réducteur 20. Un conduit de récupération de lubrifiant 40 communique avec un point bas 42 du fond d'enceinte 38. Il permet de collecter par gravité le lubrifiant qui a été préalablement projeté par les moyens 36 sur le réducteur, et de réacheminer ce lubrifiant vers le réservoir 28.

Le conduit de récupération de lubrifiant 40 est équipé d'une vanne commandée 44, qui, en conditions normales de fonctionnement du turboréacteur, reste ouverte pour permettre l'évacuation du lubrifiant et éviter son accumulation dans le fond d'enceinte 38. Il peut par exemple s'agir d'une vanne à tiroir, répondant à la pression de lubrifiant circulant dans le conduit d'arrivée de lubrifiant 34 en direction de l'enceinte 26. En effet, cette vanne 44 peut être conçue de sorte que plus la pression de lubrifiant est forte dans le conduit 34, plus la vanne 44 a tendance à rester ouverte. A l'inverse, plus la pression de lubrifiant est faible, plus la vanne a tendance à se fermer pour obturer le conduit de récupération 40.

Un couplage mécanique ou électrique 46 peut être prévu entre la vanne 44 et un organe 47 logé dans le conduit 34 ou dans une chambre communiquant avec le conduit 34, cet organe 47 répondant à la pression du lubrifiant circulant dans ce dernier. L'organe 47 comprend par exemple un piston mobile relié à un obturateur de la vanne 44 par un couplage 46 mécanique, ce piston agissant contre l'action d'un ressort taré en fonction du seuil de pression de lubrifiant en dessous duquel la vanne est prévue pour se fermer complètement. Il est entendu que la vanne 44, le couplage mécanique 46 et l'organe 47 mobile peuvent être regroupés dans un même dispositif. En alternative, l'organe 47 peut être constitué par un manomètre relié à la vanne 44 par un couplage 46 électrique pour commander le déclenchement d'un actionneur de fermeture de la vanne lorsque la pression mesurée par le manomètre 47 descend en dessous d'un seuil de pression prédéterminé.

Le système de lubrification 24 comporte également un conduit d'évacuation de trop plein de lubrifiant 48, présentant un intérêt particulier en cas d'autorotation de la soufflante, comme cela sera décrit ultérieurement. Le conduit d'évacuation 48 est raccordé à l'une de ses extrémités à une sortie de trop plein 50, prévue à travers la paroi du fond d'enceinte 38. A son extrémité opposée, le conduit d'évacuation 48 est raccordé au conduit de récupération 40, en aval de la vanne commandée 44.

Le réducteur 20 est centré sur l'axe géométrique 3 de l'arbre basse pression 11, qui est aussi l'axe géométrique du moyeu de soufflante 17. Il comporte un train épicycloïdal, qui dans la configuration représentée est classiquement équipé d'un planétaire intérieur 52 centré sur l'axe 3 et solidaire en rotation d'une extrémité avant de l'arbre basse pression 11 du turboréacteur, d'un planétaire extérieur également appelé couronne extérieure 54, correspondant à l'organe de sortie du réducteur solidaire en rotation du moyeu de soufflante 17, et d'un porte-satellites 58 fixe supportant une rangée annulaire de satellites 56 agencés entre les planétaires 52, 54. D'autres configurations sont bien entendu possibles pour le réducteur, en particulier avec un porte-satellite tournant correspondant à l'organe de sortie du réducteur, un planétaire intérieur tournant, et une couronne extérieure fixe.

En conditions normales de fonctionnement du turboréacteur, l'arbre haute pression 13 tourne à une vitesse suffisamment élevée pour entraîner la pompe d'alimentation 30. Comme cela est schématisé par les flèches de la figure 2, du lubrifiant circule ainsi avec un débit et une pression élevés dans le conduit d'arrivée de lubrifiant 34, avant d'être projeté par les moyens 36 sur la pignonnerie du réducteur 20. Ensuite, le lubrifiant s'écoule par gravité jusque dans le fond d'enceinte 38, pour être collecté par le conduit de récupération 40, puis réinjecté dans le système. En particulier, la pression forte de lubrifiant dans le conduit d'arrivée 34 maintient la vanne commandée 44 en position ouverte, ce qui permet l'échappement du lubrifiant par le conduit de récupération 40 équipé de cette même vanne. Dans ces conditions, aucune accumulation de lubrifiant n'est prévue dans le fond d'enceinte 38, puisque le lubrifiant peut librement s'échapper par le conduit 40.

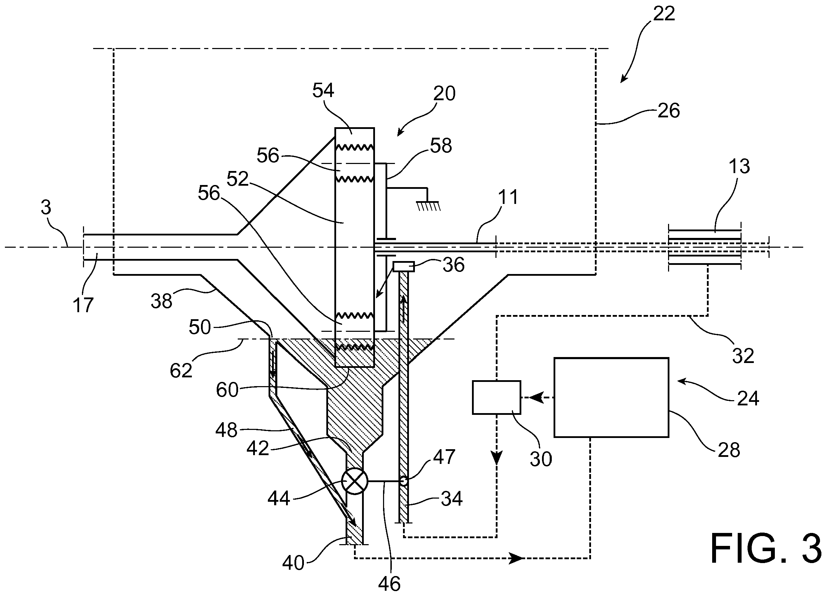

En revanche, lorsque le turboréacteur est éteint, que l'aéronef soit en vol ou au sol, la soufflante se trouve en autorotation provoquée par le vent relatif traversant les aubes de soufflante. Au sol, le vent relatif peut souffler de l'arrière vers l'avant de l'aéronef, auquel cas la soufflante peut être entrainée dans un sens de rotation inversé par rapport au sens normal de fonctionnement. La rotation de la soufflante, que ce soit dans le sens normal ou dans le sens inverse, conduit à faire tourner les éléments constitutifs du réducteur 20 qui ont besoin d'être lubrifiés en quantité suffisante, en particulier au niveau des dentures des pignons. Cette lubrification ne peut plus être convenablement assurée par la pompe d'alimentation 30, puisque l'arbre haute pression 13 qui l'entraîne ne tourne plus à une vitesse suffisamment élevée. Cependant, comme cela est illustré par les flèches de la figure 3, du lubrifiant est tout de même amené à faible pression et à faible débit dans l'enceinte 26 par le conduit d'arrivée 34, sans pouvoir nécessairement atteindre la pignonnerie du réducteur 20.

L'invention prévoit que dans de telles conditions d'autorotation de la soufflante, la vanne commandée 44 se ferme en raison de la faible pression du lubrifiant dans le conduit d'arrivée 34. En se fermant, la vanne 44 obture le conduit de récupération 40 et donc le fond d'enceinte 38. Du fait que la pompe d'alimentation 30 reste entraînée par l'arbre haute pression 13 qui tourne à basse vitesse lors d'une d'autorotation de la soufflante en vol, le fond d'enceinte 38 se remplit jusqu'à la sortie de trop plein 50. Le surplus de lubrifiant est ensuite évacué par le conduit de récupération 48, pour être réacheminé dans le système via le conduit de récupération 40, en aval de la vanne 44.

Par ailleurs, en cas de vent frontal ou arrière au sol quand le moteur est à l'arrêt, la pompe d'alimentation 30 n'est plus entraînée puisque l'arbre haute pression 13 n'est généralement plus tournant, mais du lubrifiant s'est accumulé dans le fond d'enceinte 38 suite à la fermeture de la vanne 44 en raison de la baisse de pression du lubrifiant dans le conduit d'arrivée 34, lors de l'arrêt du moteur.

Le seuil de faible pression de lubrifiant à partir duquel la vanne 44 se ferme est prédéfini de façon à ce que lors de l'arrêt de la turbomachine, la fermeture de la vanne 44 se produise suffisamment tôt avant l'arrêt de la rotation de l'arbre haute pression 13 pour assurer une accumulation de lubrifiant dans le fond d'enceinte 38 du fait que la pompe d'alimentation 30 tourne avec l'arbre 13. Dans le cas d'un entraînement électrique de la pompe d'alimentation 30, la fermeture de la vanne 44 lors de l'arrêt de la turbomachine sera prévue pour se produire suffisamment tôt avant l'arrêt de l'alimentation du moteur électrique de la pompe 30, afin d'assurer une accumulation de lubrifiant dans le fond d'enceinte 38 suffisante pour atteindre le niveau de la sortie de trop plein 50.

La sortie de trop plein 50 est agencée de manière à faire barboter le réducteur 20 dans le lubrifiant accumulé, et de préférence pour faire barboter seulement la partie inférieure de ce réducteur. Plus précisément, la sortie 50 se situe au-dessus du niveau horizontal d'un point bas 60 de la pignonnerie du réducteur, et en dessous du niveau horizontal du planétaire intérieur 52 afin que celui ne barbote pas dans le volume de lubrifiant accumulé au fond de l'enceinte 26. De manière préférée, la sortie de trop plein 50 se situe au niveau d'un plan fictif horizontal 62 traversant la rangée annulaire de satellites 56. De manière encore préférée, le plan fictif horizontal 62 se situe au-dessus du point bas 60 de la pignonnerie du réducteur même quand l'aéronef en vol est incliné dans la direction longitudinale et/ou transversale selon un angle d'inclinaison correspondant à l'inclinaison maximale autorisée pour l'aéronef dans des conditions d'autorotation de la soufflante. De cette façon, la pignonnerie continue à être lubrifiée dans toutes les « attitudes » de vol autorisées pour l'aéronef en « windmilling », notamment en cas de virage sur l'angle ou de descente. Encore plus préférentiellement, le plan 62 se situe plus bas que l'axe de rotation des satellites considérés dans leur position la plus basse entre les deux planétaires 52, 54, comme illustré sur la figure 3.

Dans cette configuration, la partie inférieure de la couronne 54 barbote dans le volume de lubrifiant accumulé au fond de l'enceinte 26, et en tournant, cette couronne entraîne avec elle le lubrifiant qui peut alors se répandre sur les dents de tous les satellites 56.

Bien entendu, diverses modifications peuvent être apportées par l'homme du métier à l'invention qui vient d'être décrite, uniquement à titre d'exemples non limitatifs et dont la portée est délimitée par les revendications annexées.

## Revendications

1. Ensemble (22) comprenant un réducteur (20) d'entraînement de soufflante de turbomachine d'aéronef, ainsi qu'un système de lubrification (24) comprenant :
- une enceinte (26) renfermant le réducteur (20) ;
- des moyens de projection de lubrifiant (36) sur le réducteur ;
- un conduit d'arrivée de lubrifiant (34) destiné à conduire le lubrifiant vers les moyens de projection (36) ;
- un conduit de récupération de lubrifiant (40) communiquant avec un fond (38) de l'enceinte (26),
**caractérisé en ce que** le système de lubrification (24) comporte en outre une vanne commandée (44) équipant le conduit de récupération de lubrifiant (40), ainsi qu'un conduit d'évacuation de trop plein de lubrifiant (48) raccordé d'une part à une sortie de trop plein (50) du fond d'enceinte située au-dessus du niveau horizontal d'un point bas (60) d'une pignonnerie du réducteur (20), et d'autre part au conduit de récupération de lubrifiant (40), en aval de la vanne commandée (44).

2. Ensemble selon la revendication 1, **caractérisé en ce que** la vanne (44) est commandée par la pression de lubrifiant circulant dans le conduit d'arrivée de lubrifiant (34), de sorte que plus la pression de lubrifiant est faible, plus la vanne a tendance à se fermer.

3. Ensemble selon la revendication 1 ou la revendication 2, **caractérisé en ce que** la vanne commandée (44) est une vanne à tiroir reliée à un organe mobile (47) soumis à la pression du lubrifiant circulant dans le conduit d'arrivée de lubrifiant (34), cet organe mobile (47) agissant contre l'action d'un ressort taré en fonction d'un seuil de pression de lubrifiant en dessous duquel la vanne est prévue pour se fermer complètement.

4. Ensemble selon l'une quelconque des revendications précédentes, **caractérisé en ce que** le réducteur d'entraînement (20) comporte un train épicycloïdal comprenant un planétaire intérieur (52), une couronne extérieure (54), ainsi qu'une rangée annulaire de satellites (56) agencés entre le planétaire intérieur et la couronne extérieure.

5. Ensemble selon la revendication précédente, **caractérisé en ce que** la sortie de trop plein (50) du fond d'enceinte (38) se situe en dessous du niveau horizontal du planétaire intérieur (52).

6. Ensemble selon la revendication précédente, **caractérisé en ce que** la sortie de trop plein (50) du fond d'enceinte (38) se situe au niveau d'un plan fictif horizontal (62) traversant la rangée annulaire de satellites (56).

7. Turbomachine (1) d'aéronef comprenant un ensemble (22) selon l'une quelconque des revendications précédentes, la turbomachine comportant une soufflante (15) entraînée par le réducteur (20) de cet ensemble.

8. Turbomachine selon la revendication précédente, **caractérisée en ce qu'**elle est un turboréacteur à double flux et à double corps.

9. Turbomachine selon la revendication 7 ou la revendication 8, **caractérisée en ce que** le système de lubrification (24) comporte une pompe d'alimentation (30) configurée pour alimenter en lubrifiant le conduit d'arrivée de lubrifiant (34), et **en ce que** la turbomachine comporte un arbre moteur, de préférence un arbre haute pression (13), entraînant mécaniquement la pompe d'alimentation (30).

10. Procédé de commande d'un ensemble (22) selon l'une quelconque des revendications 1 à 6, **caractérisé en ce qu'**en cas d'autorotation de la soufflante (15), il comprend une étape de fermeture de la vanne commandée (44) équipant le conduit de récupération de lubrifiant (40), afin que le fond (38) de l'enceinte (26) se remplisse de lubrifiant jusqu'à la sortie de trop plein (50).

## Patentansprüche

1. Anordnung (22) mit einem Lüfterantriebsuntersetzungsgetriebe (20) eines Flugzeugtriebwerks sowie ein Schmiersystem (24), umfassend:
- ein das Untersetzungsgetriebe (20) verschließendes Gehäuse (26);
- Einrichtungen zum Spritzen von Schmiermittel (36) auf das Untersetzungsgetriebe;
- eine Schmiermittelzuführleitung (34) zum Zuführen des Schmiermittels zu den Spritzeinrichtungen (36);
- eine Schmiermittelrückführleitung (40), die mit einem Boden (38) des Gehäuses (26) in Verbindung steht,
**dadurch gekennzeichnet, dass** das Schmiersystem (24) außerdem ein gesteuertes Ventil (44), das an der Schmiermittelrückführleitung (40) vorgesehen ist, sowie eine Abführleitung für den Schmiermittelüberlauf (48) aufweist, die einerseits mit einer Überlauföffnung (50) des Gehäusebodens, die oberhalb der horizontalen Ebene eines tiefsten Punktes (60) einer Zahnradanordnung des Untersetzungsgetriebes (20) liegt, und andererseits mit der Schmiermittelrückführleitung (40) stromabwärts des gesteuerten Ventils (44) verbunden ist.

2. Anordnung nach Anspruch 1, **dadurch gekennzeichnet, dass** das Ventil (44) durch den Druck des in der Schmiermittelzuführleitung (34) zirkulierenden Schmiermittels derart gesteuert wird, dass sich das Ventil umso eher schließt, je niedriger der Druck des Schmiermittels ist.

3. Anordnung nach Anspruch 1 oder Anspruch 2, **dadurch gekennzeichnet, dass** das gesteuerte Ventil (44) ein Schieberventil ist, das mit einem beweglichen Element (47) verbunden ist, welches dem Druck des in der Schmiermittelzuführleitung (34) zirkulierenden Schmiermittels unterliegt, wobei das bewegliche Element (47) der Wirkung einer kalibrierten Feder in Abhängigkeit eines Schwellenwertes des Schmiermitteldrucks entgegenwirkt, unterhalb dessen sich das Ventil vollständig schließen soll.

4. Anordnung nach einem der vorhergehenden Ansprüche, **dadurch gekennzeichnet, dass** das Antriebsuntersetzungsgetriebe (20) ein Planetengetriebe mit einem inneren Sonnenrad (52), einem äußeren Hohlrad (54) sowie einer ringförmigen Reihe von Planetenrädern (56) aufweist, die zwischen dem inneren Sonnenrad und dem äußeren Hohlrad angeordnet sind.

5. Anordnung nach dem vorhergehenden Anspruch, **dadurch gekennzeichnet, dass** die Überlauföffnung (50) des Gehäusebodens (38) unterhalb der horizontalen Ebene des inneren Sonnenrades (52) liegt.

6. Anordnung nach dem vorhergehenden Anspruch, **dadurch gekennzeichnet, dass** die Überlauföffnung des Gehäusebodens (38) auf der Höhe einer gedachten horizontalen Ebene (62) liegt, die durch die ringförmige Reihe von Planetenrädern (56) verläuft.

7. Flugzeugtriebwerk (1) mit einer Anordnung (22) nach einem der vorhergehenden Ansprüche, wobei das Triebwerk einen von dem Untersetzungsgetriebe (20) der Anordnung angetriebenen Lüfter (15) umfasst.

8. Triebwerk nach dem vorhergehenden Anspruch, **dadurch gekennzeichnet, dass** es ein Zweikreis- und Zweiwellen-Triebwerk ist.

9. Triebwerk nach Anspruch 7 oder Anspruch 8, **dadurch gekennzeichnet, dass** das Schmiersystem (24) eine Speisepumpe (30) umfasst, die zur Versorgung der Schmiermittelzuführleitung (34) mit Schmiermittel ausgeführt ist, und dass das Triebwerk eine Antriebswelle, vorzugsweise eine Hochdruckwelle (13), umfasst, die die Speisepumpe (30) mechanisch antreibt.

10. Verfahren zur Steuerung einer Anordnung (22) nach einem der Ansprüche 1 bis 6, **dadurch gekennzeichnet, dass** sie im Falle einer Eigenrotation des Lüfters (15) einen Schritt des Verschließens des gesteuerten Ventils (44) umfasst, welches an der Schmiermittelrückführleitung (40) vorgesehen ist, damit sich der Boden (38) des Gehäuses (26) bis zur Überlauföffnung (50) mit Schmiermittel füllt.

## Claims

1. Assembly (22) comprising a fan drive reducing gear (20) for an aircraft turbine engine, as well as a lubrication system (24) comprising:
- a casing (26) enclosing the reducing gear (20);
- means for projecting lubricant (36) onto the reducing gear;
- a lubricant intake pipe (34) intended to conduct the lubricant towards the projection means (36);
- a lubricant recovery line (40) communicating with a bottom (38) of the casing (26),
**characterised in that** the lubrication system (24) also includes an actuated valve (44) fitted to the lubricant recovery line (40), as well as a lubricant overflow discharge line (48) connected on the one hand to an overflow outlet (50) at the bottom of the casing located above the horizontal level of a low point (60) of a gearset of the reducing gear (20), and on the other hand to the lubricant recovery line (40), downstream of the actuated valve (44).

2. Assembly according to claim 1, **characterised in that** the valve (44) is controlled by the pressure of lubricant circulating in the lubricant intake pipe (34), such that the lower the pressure of the lubricant the greater the tendency of the valve to close.

3. Assembly according to claim 1 or claim 2, **characterised in that** the actuated valve (44) is a slide valve connected to a moving part (47) subjected to the pressure of the lubricant circulating in the lubricant intake pipe (34), this moving part (47) acting against the action of a preloaded spring as a function of a threshold lubricant pressure below which the valve is set to close completely.

4. Assembly according to any of the preceding claims, **characterised in that** the drive reducing gear (20) includes a planetary gear set comprising an inner planetary gear (52), an outer ring gear (54), as well as an annular row of satellites (56) arranged between the inner planetary gear and the outer ring gear.

5. Assembly according to the preceding claim, **characterised in that** the overflow outlet (50) of the bottom casing (38) is located below the horizontal level of the inner planetary gear (52).

6. Assembly according to the preceding claim, **characterised in that** the overflow outlet (50) at the bottom of the casing (38) is located in an imaginary horizontal plane (62) traversing the annular row of satellites (56).

7. Turbine engine (1) of an aircraft comprising an assembly (22) according to any of the preceding claims, the turbine engine including a fan (15) driven by the reducing gear (20) of this assembly.

8. Turbine engine according to the preceding claim, **characterised in that** it is a dual-flow and dual body turbojet engine.

9. Turbine engine according to claim 7 or claim 8, **characterised in that** the lubrication system (24) includes a feed pump (30) configured to supply the lubricant intake pipe (34) with lubricant, and **in that** the turbine engine includes an engine shaft, preferably a high-pressure shaft (13), mechanically driving the feed pump (30).

10. Method for controlling an assembly (22) according to any of claims 1 to 6, **characterised in that** in the case of autorotation of the fan (15) it comprises a step of closing the actuated valve (44) fitted to the lubrication recovery line (40), so that the bottom (38) of the casing (26) is filled with lubricant up to the overflow outlet (50).
